# FASCICULE DE BREVET EUROPEEN

(11) **EP 2 086 831 B1**
(45) Date de publication et mention de la délivrance du brevet: **03.07.2013**
(21) Numéro de dépôt: 07866478.6
(22) Date de dépôt: 31.10.2007
(51) Int. Cl.: B64C 21/04

(54) **DISPOSITIF POUR RETARDER LE DECOLLEMENT D'UNE COUCHE LIMITE**
VORRICHTUNG ZUR VERZÖGERUNG DER ABLÖSUNG EINER GRENZSCHICHT
DEVICE FOR DELAYING BOUNDARY LAYER SEPARATION

(30) Priorité: 03.11.2006 FR 0609628
(43) Date de publication de la demande: 12.08.2009
(73) Titulaire: Centre National de la Recherche Scientifique, 75794 Paris Cedex 16 (FR)
(72) Inventeur: STANISLAS, Michel, 59493 Vílleneuve D'ASQ (FR); FOUCAUT, Jean-Marc, 59810 Lesquin (FR); KOSTAS, Dimitrios, Melbourne (AU); DYMENT, Arthur, 59152 Chereng (FR)
(74) Mandataire: Ramey, Daniel
(86) Numéro de dépôt international: PCT/FR2007/001810
(87) Numéro de publication internationale: WO 2008/059140

(56) Documents cités:
- EP-A- 1 623 922
- GB-A- 792 243
- JP-A- 59 166 769
- US-A1- 2005 127 245
- US-B1- 6 390 116
- A.SEIFERT: "Oscillatory blowing: a tool to delay boundary layer separation" AIAA JOURNAL, vol. 31, no. 11, 11 janvier 1993 (1993-01-11), pages 2052-2060, XP009084220 Reno, NV

## Description

L'invention concerne un dispositif pour retarder le décollement d'une couche limite dans un écoulement d'air sur une paroi, telle par exemple qu'une aile d'avion ou une carrosserie de véhicule automobile.

Le décollement de la couche limite sur une aile d'avion se produit quand l'angle d'attaque de l'aile par rapport à l'écoulement devient important, ce qui arrive au décollage, à l'atterrissage et pendant les manoeuvres, et se traduit par une diminution de la portance et par la génération d'une traînée et donc par une diminution sensible des performances aérodynamiques de l'avion.

Dans le document EP-A-1623922, on a déjà proposé, pour retarder ce décollement, d'utiliser des jets continus ou pulsés, qui sont produits par alimentation en air sous pression d'orifices formés dans la paroi et inclinés par exemple dans une direction perpendiculaire à l'écoulement et à 45° par rapport à la surface de la paroi, ces jets générant des tourbillons qui augmentent le frottement de l'écoulement sur la paroi et s'opposent au décollement de la couche limite.

Ces jets, continus ou pulsés, sont commandés par des moyens tels que des électrovannes et ne sont générés que pendant les phases de vol où ils sont utiles. Les jets pulsés sont moins efficaces que les jets continus mais ont l'avantage de consommer moins d'air comprimé prélevé sur un moteur de l'avion car ce prélèvement se traduit par une diminution du rendement du moteur.

La présente invention a notamment pour but d'améliorer les performances des dispositifs du type précité à jets pulsés.

Elle propose à cet effet un dispositif pour retarder le décollement d'une couche limite dans un écoulement d'air sur une paroi, comprenant des orifices formés dans la paroi avec une inclinaison déterminée par rapport à la direction de l'écoulement sur la paroi et par rapport à la surface de la paroi, des conduits reliant ces orifices à des moyens d'alimentation en air sous pression, et des moyens de commande des moyens d'alimentation en ouverture et en fermeture, caractérisé en ce que la fréquence des cycles d'ouverture et de fermeture des moyens d'alimentation et la durée d'ouverture des moyens d'alimentation dans chaque cycle sont déterminées pour générer en sortie des orifices, à l'ouverture des vannes, des pics de vitesse d'air qui se succèdent de façon quasi-continue, ou la durée d'ouverture des moyens d'alimentation est comprise entre 5 et 10ms environ en fonction de la longueur des conduits. La fréquence du cycle d'ouverture et de fermeture des moyens d'alimentation est de préférence comprise entre 30Hz et 200Hz en fonction de la longueur des conduits.

Cette détermination de la fréquence des cycles d'ouverture et de fermeture des moyens d'alimentation et de la durée d'ouverture des moyens d'alimentation dans chaque cycle permet d'optimiser les conditions de génération des jets pulsés et d'utiliser au mieux les pics de vitesse créés à l'ouverture des moyens d'alimentation, pour se rapprocher des résultats obtenus avec des jets continus, tout en consommant beaucoup moins d'air comprimé.

La pression (en valeur relative) de l'air d'alimentation des orifices est comprise entre 0,1 et 8 bars environ, le diamètre des orifices étant compris entre 1 et 10 mm environ et la longueur des conduits d'alimentation de ces orifices entre 10 cm et 1 m environ.

Les jets pulsés peuvent être produits par des orifices inclinés de la même façon et dans le même sens par rapport à la surface de la paroi et génèrent alors des tourbillons co-rotatifs (qui tournent dans le même sens).

En variante, les jets pulsés peuvent être produits par des orifices qui sont deux à deux inclinés dans des sens opposés par rapport à la surface de la paroi, et génèrent alors des tourbillons contra-rotatifs (qui tournent dans des sens opposés).

Les moyens d'alimentation en air sous pression peuvent comprendre des électrovannes dont les entrées sont reliées à une source d'air sous pression et les sorties aux orifices de la paroi, ou en variante, un distributeur comprenant un tube tournant alimenté en air sous pression et comportant des rangées de trous radiaux, ce tube étant entraîné en rotation dans un carter cylindrique comportant des trous radiaux qui sont reliés aux orifices de la paroi et qui sont alignés axialement avec les trous du tube tournant pour être cycliquement alimentés en air sous pression et obturés pendant la rotation du tube tournant.

L'invention s'applique en particulier à une aile d'avion ou à une carrosserie de véhicule automobile, l'air comprimé qui alimente les orifices précités étant prélevé sur un compresseur d'un moteur de l'avion ou du moteur du véhicule automobile, respectivement, ou sur un compresseur auxiliaire.

De façon générale, l'invention permet d'augmenter d'environ 70 % le frottement de l'air sur la paroi, en aval des orifices précités, tout en consommant, selon les configurations, deux à cinq fois moins d'air environ qu'un dispositif équivalent à jets continus.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un écoulement d'air sur une paroi profilée telle qu'une aile d'avion ;
- la figure 2 représente schématiquement les moyens essentiels d'un dispositif selon l'invention ;
- les figures 3 et 4 représentent respectivement des orifices à jets co-rotatifs et contra-rotatifs ;
- la figure 5 est un graphe représentant la variation de la vitesse d'un jet pulsé pendant la durée d'un cycle d'ouverture et de fermeture d'une vanne ;
- la figure 6 est un graphe représentant la variation de la vitesse de sortie d'un jet pulsé en fonction du temps dans le dispositif selon l'invention ;
- la figure 7 est une vue schématique en coupe d'un distributeur tournant d'alimentation en air sous pression.

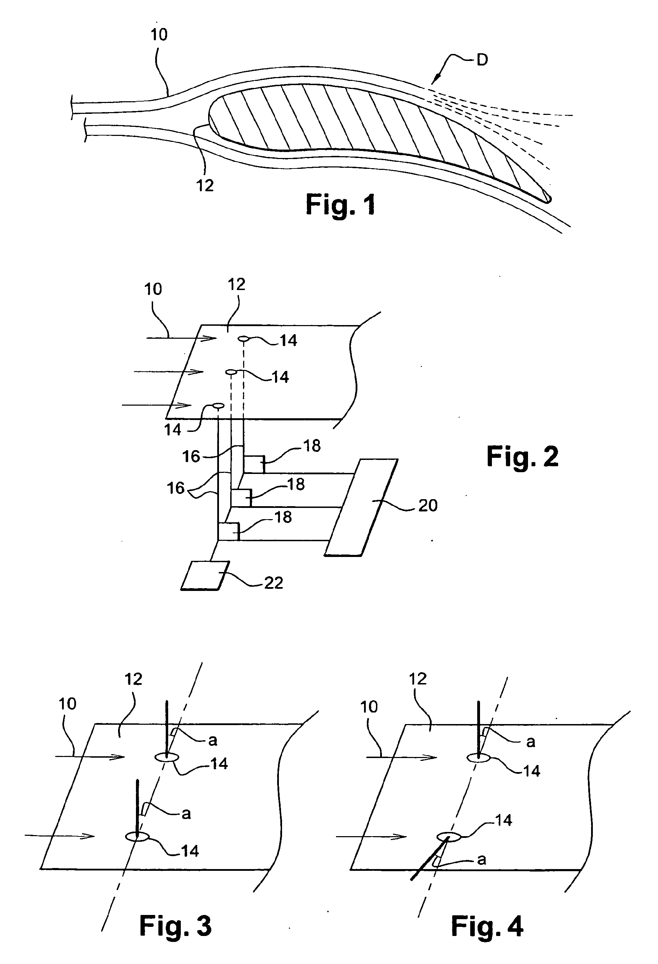

En figure 1, on a représenté schématiquement un écoulement d'air 10 sur une paroi profilée 12 telle qu'une aile d'avion avec un décollement de couche limite dans une zone D de l'extrados, ce décollement se traduisant par une réduction de la portance et par une augmentation de la traînée et donc par une dégradation des performances aérodynamiques de l'avion.

Pour retarder ce décollement, le dispositif selon l'invention comprend au moins une rangée d'orifices 14 qui sont formés dans la paroi 12 le long d'une ligne perpendiculaire à l'écoulement 10 et qui sont alimentés en air sous pression par des tubes ou conduits 16 reliés par des électrovannes 18 à une source 20 d'air sous pression, cet air étant prélevé sur un compresseur d'un moteur de l'avion ou sur un compresseur auxiliaire.

Les jets d'air sous pression sortant des orifices 14 génèrent des tourbillons qui ont pour effet d'augmenter le frottement de l'air sur la paroi 12 dans la couche limite et donc de retarder le décollement de cette couche limite.

Les études qui ont été faites par divers auteurs sur les dispositifs à jets continus ou à jets pulsés ont montré que de bons résultats pouvaient être obtenus lorsque les tourbillons produits tournent dans le même sens, ce que l'on obtient lorsque les axes des orifices 14 sont inclinés d'un même angle a et dans le même sens par rapport à la paroi 12, comme représenté en figure 3, les tourbillons pouvant également être contra-rotatifs, ce qui est obtenu lorsque les axes des orifices 14 sont inclinés d'un même angle a par rapport à la paroi 12 mais deux à deux dans des sens opposés comme représenté schématiquement en figure 4, cet angle pouvant être positif ou négatif et compris entre - 45° et + 45°.

Dans un mode de réalisation préféré, les orifices 14 sont cylindriques à section circulaire, leurs axes sont perpendiculaires à la direction générale de l'écoulement 10 et leur angle d'inclinaison par rapport à la paroi 12 est de 45°.

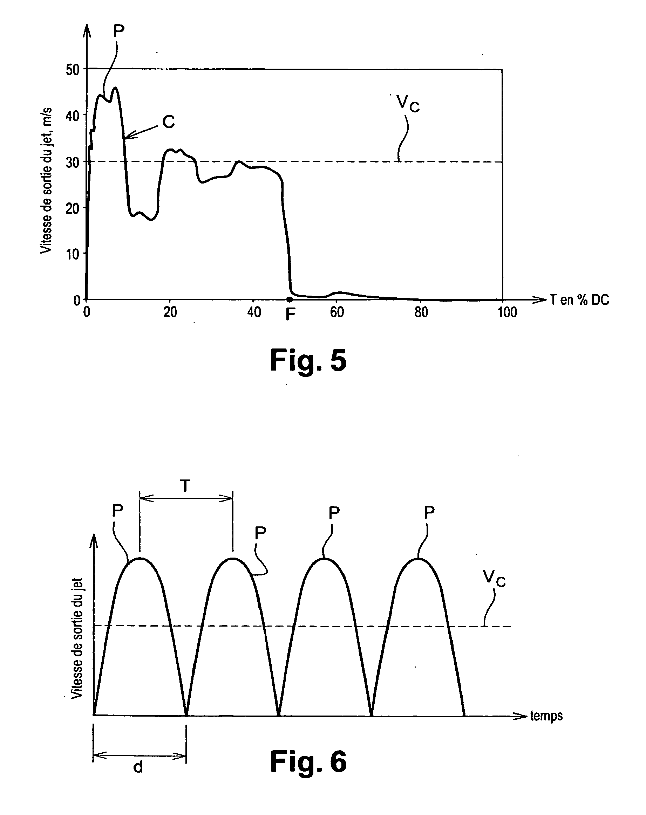

Les vannes 18 sont commandées en ouverture et en fermeture de façon cyclique, par exemple par un système 22 à microprocesseur, pour produire des jets pulsés en sortie des orifices 14. La variation de la vitesse de sortie d'un jet pulsé pendant la durée T d'un cycle d'ouverture et de fermeture de la vanne correspondante, est représentée par la courbe C en figure 5. On voit qu'il se produit un pic de vitesse P au début de l'ouverture de la vanne après quoi la vitesse de sortie du jet oscille et se rapproche d'une valeur Vc qui correspond à la vitesse de sortie d'un jet continu sortant du même orifice alimenté par la même pression d'air, la vitesse s'annulant ensuite quand la vanne est fermée en F à un moment qui correspond à 50% de la durée T du cycle d'ouverture et de fermeture, dans l'exemple représenté.

Au pic P, la vitesse de sortie du jet pulsé est supérieure d'environ 50% à la vitesse Vc d'un jet continu généré dans les mêmes conditions, le pic de vitesse étant dû à un phénomène acoustique dans le tube 16 à l'ouverture de la vanne 18.

Selon l'invention, la durée d d'ouverture de la vanne dans un cycle et la fréquence 1/T des cycles d'ouverture et de fermeture de la vanne sont déterminées de façon à ce que les pics de vitesse P dans les différents cycles d'ouverture se suivent de façon quasi-continue comme représenté schématiquement en figure 6.

Une valeur optimale de d est comprise entre 5 et 10ms, la fréquence des cycles d'ouverture et de fermeture des vannes étant comprise entre 30 et 200Hz.

De façon préférée, la durée d'ouverture des vannes est voisine de 5ms et la fréquence des cycles d'ouverture et de fermeture des vannes est voisine de 70Hz.

La longueur des tubes 16 est choisie pour augmenter la valeur du pic de vitesse P, qui peut atteindre jusqu'à 170 % de la vitesse Vc d'un jet continu produit dans les mêmes conditions, cette longueur de tube étant de façon générale comprise entre 0,1 et 1 m environ, le diamètre des orifices 14 étant compris entre 1 et 10 mm.

Lorsque les orifices 14 sont alimentés comme représenté schématiquement en figure 6, le débit total d'air comprimé est égal à environ 35% du débit des jets continus à la même pression d'alimentation. Pour une pression (relative) d'alimentation de 2 bars, la vitesse de sortie des jets pulsés atteint une valeur maximale de 70ms. Le gain en frottement dans la couche limite, en aval des orifices 14, est alors de l'ordre de 70%.

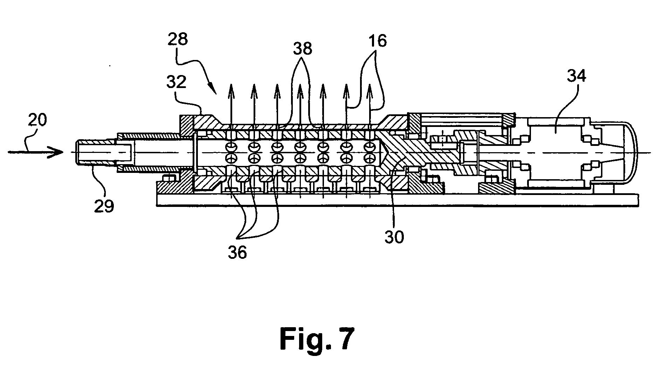

La figure 7 représente schématiquement des moyens d'alimentation des orifices 14 en air sous pression, ces moyens comprenant à la place des vannes 18 un distributeur tournant 28 connecté à la source d'air sous pression 20 par l'embout 29 et à des conduits 16 menant aux orifices 14.

Le distributeur 28 comprend un tube cylindrique 30 qui est monté tournant autour de son axe dans un carter cylindrique 32 et qui est entraîné en rotation par un moteur électrique 34 commandé par un système à microprocesseur, tel que le système 22 de la figure 2.

Le tube cylindrique 30 est alimenté en air sous pression à l'une de ses extrémités par la source 20 et comporte des rangées annulaires de trous radiaux 36 de passage d'air comprimé. Le carter 32 comprend des trous radiaux 38 qui sont axialement alignés avec les rangées de trous radiaux 36 du tube tournant 30 de façon à être cycliquement alimentés en air sous pression et obturés lors de la rotation du tube 30.

La fréquence de pulsation de ce distributeur est définie par le produit de la vitesse de rotation du tube tournant 30 et du nombre de trous 36 défilant devant un trou 38 du carter pendant un tour de rotation du tube.

Dans le dispositif selon l'invention, le gain en frottements dans la couche limite, en aval des orifices 14, est proportionnel à la quantité de mouvement injectée qui dépend linéairement du DC (Duty Cycle) pour un rapport donné de la vitesse des jets en sortie des orifices 14 et de la vitesse de l'écoulement infini amont. Dans le dispositif de la figure 2, le DC est égal au rapport entre le temps d'injection d et la fréquence T du cycle. Dans la variante de réalisation de la figure 7, le DC est égal au rapport entre le diamètre des trous 36 du tube tournant et la somme de leur diamètre et de leur espacement circonférentiel autour de l'axe du tube.

Un des avantages du distributeur 28 de la figure 7 est la très forte amélioration du rendement : les pertes de charge sont réduites pour l'obtention d'une grande vitesse en sortie des orifices 14, pour des débits qui sont très faibles. La pression relative d'alimentation est comprise entre 0 et 1,4 bars pour des vitesses en sortie des orifices 14 qui peuvent atteindre la vitesse du son. Pour une pression d'alimentation relativement faible de 0,4 bars, on obtient en sortie des orifices 14 des vitesses de jet élevées d'environ 0,7 fois la vitesse du son.

Un autre avantage du distributeur 28 est sa compacité qui permet de le loger facilement à l'intérieur d'une aile d'avion.

## Revendications

1. Dispositif pour retarder le décollement d'une couche limite dans un écoulement d'air sur une paroi, comprenant des orifices (14) formés dans la paroi (12) avec une inclinaison déterminée par rapport à la direction de l'écoulement (10) sur la paroi et par rapport à la surface de la paroi, des conduits (16) reliant ces orifices à des moyens (18) d'alimentation en air sous pression, et des moyens de commande des moyens d'alimentation en ouverture et en fermeture, **caractérisé en ce que** la fréquence des cycles d'ouverture et de fermeture des moyens d'alimentation (18) est comprise entre 30 et 200 Hz et la durée d'ouverture des moyens d'alimentation dans chaque cycle est comprise entre 5 et 10 ms de manière à générer en sortie des orifices des pics de vitesse (P) qui se succèdent de façon quasi-continue.

2. Dispositif selon la revendication 1 , **caractérisé en ce que** la durée d'ouverture des moyens d'alimentation est d'environ 5 ms.

3. Dispositif selon l'une des revendications précédentes, **caractérisé en ce que** la fréquence des cycles d'ouverture et de fermeture des vannes est d'environ 70Hz.

4. Dispositif selon l'une des revendications précédentes, **caractérisé en ce que** la pression relative de l'air alimentant les orifices (14) est comprise entre 1 et 8 bars environ.

5. Dispositif selon l'une des revendications précédentes, **caractérisé en ce que** le diamètre des orifices (14) est compris entre 1 et 10 mm.

6. Dispositif selon l'une des revendications précédentes, **caractérisé en ce que** la longueur des conduits (16) reliant les orifices (14) aux moyens d'alimentation (18) est comprise entre 0,1 et 1 m.

7. Dispositif selon l'une des revendications précédentes, **caractérisé en ce que** les axes des orifices (14) sont inclinés dans le même sens par rapport à la paroi (12) ou sont inclinés deux à deux d'un même angle dans des directions opposées par rapport à la paroi (12).

8. Dispositif selon l'une des revendications précédentes, **caractérisé en ce que** les moyens d'alimentation comprennent des électrovannes (18) reliées à une source (20) d'air sous pression.

9. Dispositif selon l'une des revendications 1 à 8, **caractérisé en ce que** les moyens d'alimentation comprennent un tube tournant (30) comportant des rangées de trous radiaux (36) et alimenté en air sous pression, ce tube étant entraîné en rotation dans un carter cylindrique (32) comportant des trous radiaux de sortie (38) qui sont reliés par des conduits aux orifices (14) de la paroi (12) et qui sont alignés axialement avec les trous (36) du tube tournant (30) pour être cycliquement alimentés en air sous pression et obturés pendant la rotation du tube tournant.

10. Dispositif selon l'une des revendications précédentes, **caractérisé en ce qu'**il est appliqué à une aile d'avion ou à une carrosserie de véhicule automobile.

11. Dispositif selon la revendication 10, **caractérisé en ce que** l'air comprimé alimentant les orifices (14) de la paroi (12) est prélevé sur le moteur de l'avion ou du véhicule automobile ou est fourni par un compresseur auxiliaire.

## Patentansprüche

1. Vorrichtung zum Verzögern der Ablösung einer Grenzschicht in einem Luftstrom an einer Wand, umfassend Öffnungen (14), die in der Wand (12) mit einer vorgegebenen Neigung zur Strömungsrichtung (10) an der Wand und zur Oberfläche der Wand ausgebildet sind, Leitungen (16), die diese Öffnungen mit Mitteln (18) zur Versorgung mit Druckluft verbinden, und Mittel zum Ansteuern von Versorgungsmitteln zum Öffnen und Schließen, **dadurch gekennzeichnet, dass** die Frequenz der Betriebszyklen zum Öffnen und Schließen der Versorgungsmittel (18) zwischen 30 und 200 Hz beträgt und die Dauer des Öffnens der Versorgungsmittel in jedem Betriebszyklus zwischen 5 und 10 ms beträgt, so dass am Auslass der Öffnungen Geschwindigkeitsspitzen (P) erzeugt werden, die quasi kontinuierlich aufeinander folgen.

2. Vorrichtung nach Anspruch 1, **dadurch gekennzeichnet, dass** die Dauer des Öffnens der Versorgungsmittel ungefähr 5 ms beträgt.

3. Vorrichtung nach einem der vorhergehenden Ansprüche, **dadurch gekennzeichnet, dass** die Frequenz der Öffnungs- und Schließzyklen von Ventilen ungefähr 70 Hz beträgt.

4. Vorrichtung nach einem der vorhergehenden Ansprüche, **dadurch gekennzeichnet, dass** der relative Druck der Luft, mit der die Öffnungen (14) beaufschlagt werden, zwischen ungefähr 1 bis 8 bar beträgt.

5. Vorrichtung nach einem der vorhergehenden Ansprüche, **dadurch gekennzeichnet, dass** der Durchmesser der Öffnungen (14) zwischen 1 und 10 mm beträgt.

6. Vorrichtung nach einem der vorhergehenden Ansprüche, **dadurch gekennzeichnet, dass** die Länge der Leitungen (16), die die Öffnungen (14) mit Versorgungsmitteln (18) verbinden, zwischen 0,1 und 1 m beträgt.

7. Vorrichtung nach einem der vorhergehenden Ansprüche, **dadurch gekennzeichnet, dass** die Achsen der Öffnungen (14) in die gleiche Richtung zur Wand (12) geneigt sind oder jeweils zwei in einem gleichen Winkel in entgegengesetzte Richtungen zur Wand (12) geneigt sind.

8. Vorrichtung nach einem der vorhergehenden Ansprüche, **dadurch gekennzeichnet, dass** die Versorgungsmittel Elektroventile (18) umfassen, die mit einer Druckluftquelle (20) verbunden sind.

9. Vorrichtung nach einem der Ansprüche 1 bis 8, **dadurch gekennzeichnet, dass** die Versorgungsmittel ein drehbares Rohr (30) umfassen, das Reihen von radialen Bohrungen (36) aufweist und mit Druckluft beaufschlagt wird, wobei das Rohr in einem zylindrischen Gehäuse (32) zur Rotation angetrieben wird, das radiale Auslassbohrungen (38) aufweist, die durch Leitungen mit Öffnungen (14) der Wand (12) verbunden sind und die axial mit den Bohrungen (36) des drehbaren Rohrs (30) ausgerichtet sind, so dass sie während der Rotation des drehbaren Rohrs zyklisch mit Druckluft beaufschlagt und verschlossen werden.

10. Vorrichtung nach einem der vorhergehenden Ansprüche, **dadurch gekennzeichnet, dass** sie bei einem Flügel eines Flugzeugs oder bei einer Karosserie eines Kraftfahrzeugs angewendet wird.

11. Vorrichtung nach Anspruch 10, **dadurch gekennzeichnet, dass** die auf die Öffnungen (14) der Wand (12) beaufschlagte Druckluft vom Motor des Flugzeugs oder des Kraftfahrzeugs genommen wird oder von einem Hilfskompressor bereitgestellt wird.

## Claims

1. Device for delaying the separation of a boundary limit in an air flow on a wall, comprising orifices (14) formed in the wall (12) with an inclination determined in relation to the direction of the flow (10) on the wall and in relation to the surface of the wall, ducts (16) connecting these orifices to means (18) of supplying with pressurized air, and means of controlling means of supplying as opening and as closing, **characterized in that** the frequency of the opening and closing cycles of the means of supplying (18) is between 30 and 200Hz and the duration of opening of the means of supplying in each cycle is between 5 and 10 ms in order to generate at the output of the orifices speed peaks (P) which follow one another quasi-continuously.

2. Device set forth in claim 1, **characterized in that** the duration of opening of the means of supplying is approximately 5 ms.

3. Device according to one of the preceding claims, **characterized in that** the frequency of the opening and closing cycles of the valves is approximately 70Hz.

4. Device according to one of the preceding claims, **characterized in that** the relative pressure of the air supplying the orifices (14) is between approximately 1 and 8 bars.

5. Device according to one of the preceding claims, **characterized in that** the diameter of the orifices (14) is between 1 and 10 mm.

6. Device according to one of the preceding claims, **characterized in that** the length of the ducts (16) connecting the orifices (14) to the means of supplying (18) is between 0.1 and 1 m.

7. Device according to one of the preceding claims, **characterized in that** the axes of the orifices (14) are inclined in the same direction in relation to the wall (12) or are inclined in pairs of a same angle in opposite directions in relation to the wall (12).

8. Device according to one of the preceding claims, **characterized in that** the means of supplying include solenoid valves (18) connected to a source (20) of pressurized air.

9. Device according to one of claims 1 to 8, **characterized in that** the means of supplying include a rotating tube (30) comprising rows of radial holes (36) and supplied with pressurized air, this tube being driven in rotation in a cylindrical housing (32) comprising radial holes of output (38) which are connected by ducts to the orifices (14) of the wall (12) and which are aligned axially with the holes (36) of the rotating tube (30) in order to be cyclically supplied with pressurized air and blocked off during the rotation of the rotating tube.

10. Device according to one of the preceding claims, **characterized in that** it is applied to an aircraft wing or to a motor vehicle body.

11. Device set forth in claim 10, **characterized in that** the compressed air supplying the orifices (14) of the wall (12) is bled from the aircraft engine or from the motor vehicle or is supplied by an auxiliary compressor.
